# EUROPÄISCHE PATENTSCHRIFT

(11) **EP 2 769 939 B1**
(45) Veröffentlichungstag und Bekanntmachung des Hinweises auf die Patenterteilung: **08.04.2015**
(21) Anmeldenummer: 13000906.1
(22) Anmeldetag: 22.02.2013
(51) Int. Cl.: B65G 33/34, B23K 20/12

(54) **Förderschnecke für ein Materialfördersystem einer Baumaschine**
Screw conveyor for a material conveying system of construction machine
Vis sans fin d'alimentation pour un système de transport de matériaux d'un engin

(43) Veröffentlichungstag der Anmeldung: 27.08.2014
(73) Patentinhaber: Joseph Vögele AG, 67067 Ludwigshafen (DE)
(72) Erfinder: Braun, Arthur, 67146 Deidesheim (DE)
(74) Vertreter: Grünecker Patent- und Rechtsanwälte PartG mbB

(56) Entgegenhaltungen:
- JP-A- H0 835 751
- US-A- 3 270 633
- US-A- 4 429 782

## Beschreibung

Die Erfindung bezieht sich auf einem Straßenfertiger oder Beschiker mit mindestens einem Materialfördersystem einer Baumaschine gemäß dem Oberbegriff des Anspruchs 1.

Solche Straßenfertigern sind aus der Praxis bekannt. Sie werden vorwiegend zur Beförderung von Schüttgut verwendet. Die Förderschnecken werden dabei in eine rotierende Bewegung versetzt. Das dazu notwendige Antriebsmoment wird in der Regel von einem an der Förderschneckenwelle befestigten Krafteinleitungselement übertragen. Ein solcher Straßenfertiger ist z. B. aus der US 3 270 633 A bekannt. Zur Befestigung dieses Krafteinleitungselements an der Förderschneckenwelle werden in der Regel unterschiedliche Welle-Nabe-Verbindungen eingesetzt. Dazu gehören beispielsweise Keilwellenverzahnungen, Presssitze oder auch Nut- und Federverbindungen. Aus der US 4 429 782 A ist außerdem die Befestigung mit Hilfe einer Feststellschraube bekannt. Diese Art der Verbindungen verursacht einen hohen Fertigungs- und Montageaufwand. Durch die mehrteilige Ausführung und die daraus resultierende Reibung zwischen den Bauteilen wird zusätzlich Verschleiß verursacht.

Aus einem anderen Gebiet der Technik ist bekannt, Lagerelemente mittels Reibschweißen an einer Schneckenwelle zu befestigen, bspw. aus der JP H08 035 751 A.

Aufgabe der Erfindung ist es daher, eine verbesserte Förderschnecke für ein Materialfördersystem einer Baumaschine zu schaffen, die die genannten Nachteile mit Hilfe von konstruktiv möglichst einfachen Mitteln vermindert oder aber gänzlich vermeidet.

Diese Aufgabe wird gelöst mit den Merkmalen des Anspruchs 1. Vorteilhafte Weiterbildungen sind in den Unteransprüchen gegeben.

Der erfindungsgemäße Straßenfertiger zeichnet sich dadurch aus, dass ein Förderabschnitt, der zur Beförderung von Schüttgut konfiguriert ist, und ein Antriebsabschnitt, der dazu eingerichtet ist, ein Antriebsmoment oder eine Antriebskraft aufzunehmen und auf den Förderabschnitt zu übertragen, durch Reibschweißen miteinander verbunden sind. Die Verbindung der beiden Abschnitte mittels Reibschweißen bietet dabei gleich mehrere Vorteile. Zum einen wird durch die stoffschlüssige Verbindung eine Relativbewegung zwischen den Bauteilen verhindert, und dadurch Verschleiß durch Reibung reduziert. Zum anderen sind keine aufwendigen Welle-Nabe-Verbindungen, wie z. B. Keilwellen, Presssitze, oder aber Nut- und Federverbindungen mehr nötig. Folglich entfällt auch der mit diesen Verbindungen assoziierte Fertigungsaufwand.

Es kann vorteilhaft sein, wenn der Förderabschnitt und der Antriebsabschnitt aus unterschiedlichen Werkstoffen hergestellt sind. Hier kommt ein weiterer Vorteil der Verbindung mittels Reibschweißen zum Tragen. Im Gegensatz zu anderen stoffschlüssigen Verfahren können die unterschiedlichsten Werkstoffpaarungen stoffschlüssig verbunden werden. Der Förderabschnitt einerseits und der Antriebsabschnitt andererseits können dadurch auf ihren jeweiligen Einsatzzweck hin optimiert werden. Ihre Werkstoffe können sich dabei insbesondere hinsichtlich Härte, Oberflächenhärte, Dichte, Gewicht, Kosten, Korrosionsbeständigkeit sowie Beständigkeit gegenüber gegebenenfalls verwendeten Schmiermitteln, bzw. gegenüber dem geförderten Schuttgut unterscheiden. Beide Werkstoffe können metallisch sein.

Denkbar ist es, dass der Werkstoff, aus dem der Förderabschnitt hergestellt ist, eine höhere Festigkeit aufweist als der Werkstoff, aus dem der Antriebsabschnitt hergestellt ist.

Es ist zweckmäßig, wenn der Werkstoff, aus dem der Förderabschnitt hergestellt ist, eine höhere Härte bzw. Oberflächenhärte aufweist als der Werkstoff, aus dem der Antriebsabschnitt hergestellt ist. Auf diese Art und Weise kann erhöhtem Verschleiß des Förderabschnitts, der aus der Reibung zwischen dessen Oberfläche und dem geförderten Schüttgut resultiert, vorgebeugt werden, ohne dass gleichzeitig der Antriebsabschnitt das gleiche, mitunter teure, Härteverfahren durchlaufen muss.

Es ist vorteilhaft, wenn die Förderschnecke für hohe Einsatztemperaturen geeignet ist, bevorzugt Temperaturen von mindestens 150°C, besonders bevorzugt Temperaturen von über 200°C. Eine Eignung für derartige Einsatztemperaturen liegt demnach vor, wenn sich die Bauteil- und/oder Werkstoffeigenschaften der Förderschnecke in diesem Temperaturbereichen nicht nachteilig verändern. Zu solchen nachteiligen Veränderungen zählen beispielsweise eine signifikante Verringerung der Festigkeit, eine Verformung, eine beschleunigte Oxidation der Förderschnecke, die Versprödung des Schneckenwerkstoffs, oder aber die Beschleunigung von Alterungsprozessen, welche die Lebensdauer der Förderschnecke verkürzen würden.

Zweckmäßig ist es, wenn die Förderschnecke zum Befördern von Schüttgut geeignet ist, das eine Körnung im Bereich zwischen 0 mm und 180 mm, bevorzugt zwischen 0 mm und 120 mm, besonders bevorzugt zwischen 0 mm und 80 mm, aufweist. Die Eignung für die Beförderung von Schüttgütern einer bestimmten Körnung hängt dabei im Wesentlichen von geometrischen Parametern der Förderschnecke, wie z. B. der Ganghöhe, der Oberflächenqualität, dem Blattdurchmesser, oder aber der Steigung des Schneckengewindes ab.

Es hat sich als vorteilhaft erwiesen, wenn die Förderschnecke für Drehzahlen im Bereich zwischen 0 rpm (rpm = Umdrehungen pro Minute) und 250 rpm, bevorzugt zwischen 0 rpm und 125 rpm, ausgelegt ist. Solche Drehzahlen haben sich in der Praxis bewährt. Daher ist es günstig, wenn Bauteilparameter wie z. B. das Trägheitsmoment oder aber die Resonanzfrequenz der Förderschnecke an diesen Drehzahlbereich angepasst sind. Denkbar ist es außerdem, dass die Förderschnecke zum Befördern von Schüttgut geeignet ist, das eine Viskosität im Bereich zwischen 10⁵ und 10¹⁸ mPa·s (Millipascalsekunde) aufweist. Zu diesem Zweck muss die Schnecke eine entsprechende Festigkeit aufweisen. Darüber hinaus ist eine geeignete Oberflächengüte und insbesondere Oberflächenrauheit vorzusehen. Denkbar sind hier auch verschiedene Antihaftmaßnahmen, wie z. B. Beschichtungen. Auch eine entsprechende Steigung des Schneckengewindes kann die Eignung zur Förderung von solchen Materialien positiv beeinflussen.

Besonders günstig ist es, wenn die Förderschnecke zur Förderung von bituminösen Mischgütern, insbesondere Asphalt, geeignet ist. Auch hier gilt es aufgrund der Zähigkeit von solchen Materialien eine entsprechende Festigkeit der Förderschnecke vorzusehen. Ebenso kann es vorteilhaft sein, der Adhäsionsneigung von bituminösen Mischgütern entgegenzuwirken, beispielsweise durch das Vorsehen einer entsprechenden Oberflächenqualität bzw. -rauheit. Auch hier sind Antihaftmaßnahmen wie z. B. Beschichtungen denkbar. Die Anpassung der Steigung des Schneckengewindes kann sich ebenfalls günstig auf die Eignung zur Förderung von bituminösen Mischgütern, insbesondere Asphalt, auswirken.

Es hat sich als zweckmäßig erwiesen, wenn die Drehzahl mindestens einer Förderschnecke stufenlos verstellbar ist. Auf diese Weise kann die Förderleistung gezielt angepasst werden. Bei der Verwendung von mehreren Förderschnecken kann zudem der Materialfluss in verschiedenen Richtungen gezielt gesteuert werden. Besonders günstig ist es bei der Verwendung von mehreren Förderschnecken, wenn die Drehzahl der jeweiligen Förderschnecken unabhängig voneinander verstellbar ist.

Darüber hinaus ist es günstig, wenn die Verstellung während des Betriebs erfolgen kann. In einer weiteren Variante können in einem Materialfördersystem, das mehrere Förderschnecken verwendet, diese Fördeschnecken unabhängig voneinander betreibbar sein. Dadurch kann der Materialfluss gezielt beeinflusst werden. Zusätzlich können eventuelle Inhomogenitäten des Materials hinsichtlich Temperaturverteilung oder Körnungsverteilung durch einen gezielten Durchmischungsprozess ausgeglichen werden.

Vorstellbar ist es, dass das Materialfördersystem in der Baumaschine als Querfördersystem und/oder als Längsfördersystem einsetzbar ist.

Im Folgenden wird ein vorteilhaftes Ausführungsbeispiel der Erfindung anhand von Zeichnungen erläutert.
- Figur 1: zeigt eine perspektivische Ansicht einer Baumaschine, in diesem Fall eines Straßenfertigers, in der ein erfindungsgemäßes Materialfördersystem sowie eine erfindungsgemäße Förderschnecke verbaut sind.
- Figur 2: zeigt eine erfindungsgemäße Förderschnecke.

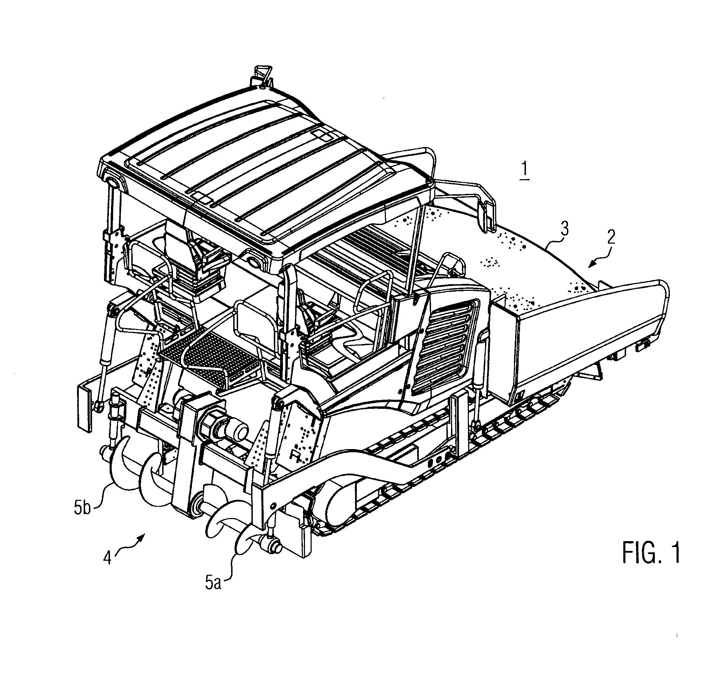

In Figur 1 ist eine Baumaschine 1, in diesem Ausführungsbeispiel ein Straßenfertiger, in einer perspektivischen Ansicht von in Fahrtrichtung hinten rechts dargestellt. In einem in Fahrtrichtung vorne angeordneten Materialbunker 2 ist Schüttgut 3, in diesem Fall Asphalt, deponiert. Dieses wird von einem Längsfördersystem (nicht sichtbar) entgegen der Fahrtrichtung nach hinten gefördert. Dort wird es von einem weiteren Materialfördersystem 4, im weiteren Verlauf als Querfördersystem 4 bezeichnet, quer zur Fahrtrichtung der Baumaschine verteilt. Im gezeigten Ausführungsbeispiel werden dafür zwei erfindungsgemäße Förderschnecken 5 eingesetzt. Anschließend wird der Asphalt durch eine nicht gezeigte Bohle geglättet und verdichtet, sodass eine ebene Asphaltschicht entsteht.

Das Ausführungsbeispiel zeigt das Materialfördersystem 4 beispielhaft als Querfördersystem 4. Es ist jedoch ebenso möglich, dass das Materialfördersystem 4 als Längsfördersystem eingesetzt wird. Außerdem ist es möglich, dass das Materialfördersystem 4 mehr als zwei Förderschnecken 5 umfasst, oder aber lediglich eine Förderschnecke 5. Zudem können die erfindungsgemäßen Förderschnecken 5 zur Förderung von beliebigem Schüttgut 3 geeignet sein und nicht nur, wie im Ausführungsbeispiel beschrieben zur Beförderung von Asphalt.

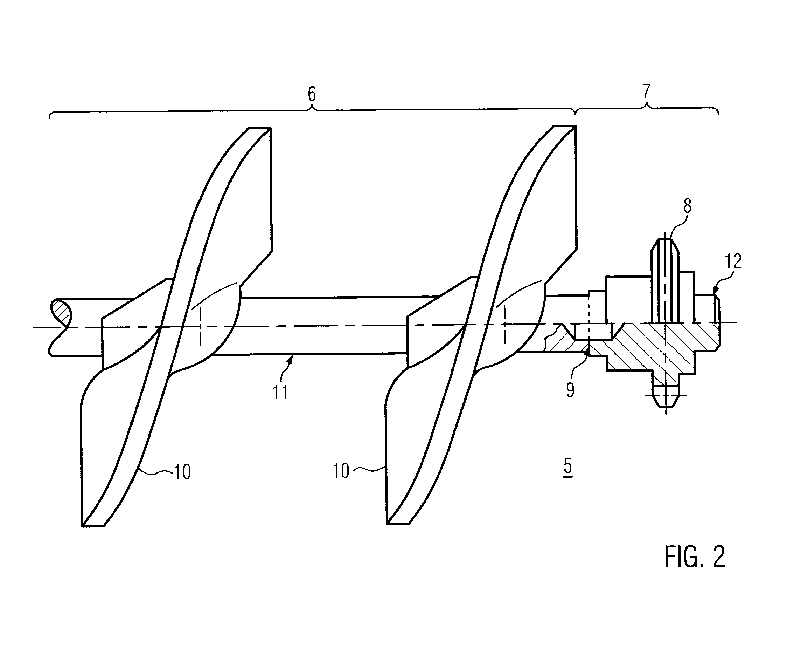

In Figur 2 ist eine erfindungsgemäße Förderschnecke 5 abgebildet. Sie umfasst einen Förderabschnitt 6 und einen Antriebsabschnitt 7. Der Förderabschnitt 6 ist zur Förderung des Schüttguts 3 vorgesehen. Der Antriebsabschnitt 7 ist dazu konfiguriert, eine Antriebskraft oder ein Antriebsmoment aufzunehmen, es auf den Förderabschnitt zu übertragen, und diesen so in eine rotierende Bewegung zu versetzten. Im gezeigten Ausführungsbeispiel weist der Antriebsabschnitt 7 zu diesem Zweck ein Zahnrad 8 auf. Dieses kann durch ein nicht gezeigtes weiteres Zahnrad oder aber durch eine ebenfalls nicht gezeigte Kette angetrieben werden. Anstatt eines Zahnrads 8 sind jedoch ebenso gut andersartige Kraftübertragungselemente denkbar, wie z. B. Riemenscheiben. Der Antriebsabschnitt 7 ist an der Reibschweißnaht 9 mit dem Förderabschnitt 6 verbunden. In Figur 2 weist der Förderabschnitt 6 zwei Flankenelemente 10 auf, die durch Rotation der Schnecke 5 das Schüttgut 3 weiter fördern. Ebenso ist es jedoch denkbar, dass der Förderabschnitt 6 eine kontinuierliche Flanke aufweist.

Der Förderabschnitt 6 kann dabei aus einem ersten Werkstoff 11 und der Antriebsabschnitt 7 aus einem zweiten Werkstoff 12 hergestellt sein. Bei den Werkstoffen 11, 12 kann es sich um den gleichen Werkstoff handeln. Vorteilhaft ist es jedoch, wenn der erste Werkstoff 11 den Anforderungen an den Förderabschnitt 6 und der zweite Werkstoff 12 den Anforderungen an den Antriebsabschnitt 7 angepasst ist. So kann der erste Werkstoff 11 beispielsweise eine höhere Härte oder aber Oberflächenhärte als der zweite Werkstoff 12 aufweisen, um Verschleiß durch die Reibung mit dem Schüttgut 3 vorzubeugen. Darüber hinaus können sich die Werkstoffe 11, 12 hinsichtlich Dichte, Kosten, Korrosionsbeständigkeit, Beständigkeit gegenüber Schmiermitteln bzw. dem geförderten Schüttgut, Adhäsionsneigung, oder Neigung zur Kaltverschweißung unterscheiden.

In einem Fall, in dem das Zahnrad 8 durch ein weiteres Zahnrad angetrieben wird, ist es beispielsweise von großer Bedeutung, dass der Werkstoff 12 aus dem das Zahnrad 8 gefertigt ist, nicht zur Kaltverschweißung mit einem Werkstoff, aus dem das weitere Zahnrad gefertigt ist, neigt. Hingegen ist es unerheblich, wenn der Werkstoff 11 aus dem der Förderabschnitt 6 gefertigt ist, zu Kaltverschweißung mit dem Werkstoff, aus dem das weitere Zahnrad gefertigt ist, neigt, da diese Werkstoffe nicht in Kontakt miteinander kommen. Umgekehrt ist es von großer Bedeutung, dass der Werkstoff 11 aus dem der Förderabschnitt 6 gefertigt ist, beständig gegenüber dem Schüttgut 3 und eine geringe Adhäsionsneigung mit diesem aufweist. Dagegen ist es unerheblich ob der Werkstoff 12, aus dem der Antriebsabschnitt 7 gefertigt ist, zur Adhäsion mit dem Schüttgut 3 neigt, oder aber weniger beständig diesem gegenüber ist, da er in der Regel nicht mit diesem in Kontakt kommt.

Im vorliegenden Ausführungsbeispiel ist die Förderschnecke für Einsatztemperaturen von mindestens 200°C geeignet. Dieser Wert kann jedoch an die Verarbeitungstemperatur des jeweiligen Schüttguts 3 angepasst werden. Werden z. B. Niedrigtemperaturasphalte oder Kaltasphalte verwendet, kann es genügen, wenn die Förderschnecke Einsatztemperaturen von 100°C bzw. 150°C ohne wesentliche Veränderungen ihrer Eigenschaften übersteht. Wichtige Eigenschaften, die sich bei der jeweiligen Einsatztemperatur nicht nachteilig verändern dürfen, sind u. a. die Festigkeit, die Oxidationsneigung und die Sprödigkeit des Werkstoffs. Dazu dürfen Alterungsprozesse, die die Lebensdauer der Förderschnecke verringern nicht beschleunigt werden.

Die Förderschnecke im Ausführungsbeispiel ist zum Befördern von Schüttgut, das eine Körnung im Bereich zwischen 0 mm und 180 mm aufweist, geeignet. Das bedeutet, sie kann z. B. eine entsprechende Ganghöhe aufweisen, die groß genug ist, um die größten Schüttgutpartikel aufzunehmen, aber auch eng genug, um eine effiziente Förderung zu gewährleisten. Des Weiteren könnte die Oberfläche derart beschaffen sein, dass Schüttgutpartikel nicht an den Flankenelementen 10 hängenbleiben. Außerdem ist es vorteilhaft, wenn der Durchmesser der Schneckenflanke gewährleistet, dass Partikel des Schüttguts 3 nicht ungewollt aus der Förderschnecke 5 entweichen. Darüber hinaus kann es zweckmäßig sein, abhängig von der gewählten Ganghöhe eine passende Steigung des Schneckengewindes vorzusehen.

Die Förderschnecke 5 im vorliegenden Ausführungsbeispiel ist für Drehzahlen im Bereich zwischen 0 rpm und 250 rpm ausgelegt. Es ist jedoch auch möglich, andere Drehzahlbereiche vorzusehen, z. B. im Bereich zwischen 0 rpm und 125 rpm. Dazu kann beispielsweise ein entsprechendes Trägheitsmoment für die Schnecke 5 vorgesehen werden. Auβerdem kann es vorteilhaft sein, wenn die Resonanzfrequenz der rotierenden Förderschnecke 5 außerhalb des vorgesehenen Drehzahlbereichs liegt.

Die Drehzahl der Förderschnecke 5 kann dabei während des Betriebs stufenlos verstellt werden. Dadurch lässt sich das Fördervolumen der Förderschnecke 5 gezielt an den Bedarf anpassen.

Das Materialfördersystem 4 bzw. die Baumaschine 1 kann beliebig viele Förderschnecken 5 umfassen. Im gezeigten Ausführungsbeispiel sind zwei Förderschnecken 5a und 5b vorgesehen. Diese sind unabhängig voneinander betreibbar, d. h. die Drehzahl der Förderschnecke 5a lässt sich unabhängig von der Drehzahl der Förderschnecke 5b einstellen und umgekehrt. Dadurch kann bei einer Kurvenfahrt des Straßenfertigers 1 ein Unterschied im Materialbedarf zwischen den beiden Seiten des Straßenfertigers berücksichtig werden. Befindet sich die Förderschnecke 5a beispielsweise auf der kurvenäußeren Seite, muss sie mit einer höheren Drehzahl laufen als die Förderschnecke 5b, die sich auf der kurveninneren Seite befindet, da auf der kurvenäußeren Seite eine längere Distanz zurückgelegt werden muss, und daher der Bedarf an Material größer ist. Außerdem können unnötige und der späteren Straßenbelagsqualität abträgliche Materialanhäufungen an der kurveninneren Förderschnecke 5b vermieden werden.

Im vorstehend beschriebenen Ausführungsbeispiel wurde die Erfindung anhand eines Straßenfertigers beschrieben. Sie kann jedoch ebenso gut an einer beliebigen Baumaschine, insbesondere an einem Beschicker verwirklicht werden.

Das Materialfördersystem 4 kann dabei das Schüttgut 3 in eine beliebige Richtung mit Bezug auf die Fahrtrichtung der Baumaschine 1 fördern, z. B. längs zur Fahrtrichtung oder aber quer zur Fahrtrichtung, wie im Ausführungsbeispiel beschrieben.

## Patentansprüche

1. Straßenfertiger (1) oder Beschicker (1) mit mindestens einem Materialfördersystem (4), das mindestens eine Förderschnecke (5) aufweist, die umfasst:
einen Förderabschnitt (6), der zur Beförderung von Schüttgut (3) konfiguriert ist,
und einen Antriebsabschnitt (7), der dazu eingerichtet ist, ein Antriebsmoment oder eine Antriebskraft aufzunehmen und auf den Förderabschnitt (6) zu übertragen,
**dadurch gekennzeichnet, dass** der Förderabschnitt (6) und der Antriebsabschnitt (7) durch Reibschweißen miteinander verbunden sind.

2. Straßenfertiger oder Beschicker nach Anspruch 1, **dadurch gekennzeichnet, dass** der Förderabschnitt (6) und der Antriebsabschnitt (7) aus unterschiedlichen Werkstoffen (11, 12) hergestellt sind.

3. Straßenfertiger oder Beschicker nach einem der vorangehenden Ansprüche, dadurch **gekennzeichnet, dass** der Werkstoff (11), aus dem der Förderabschnitt (6) hergestellt ist, eine höhere Festigkeit aufweist als der Werkstoff (12), aus dem der Antriebsabschnitt (7) hergestellt ist.

4. Straßenfertiger oder Beschicker nach einem der vorangehenden Ansprüche, dadurch **gekennzeichnet, dass** der Werkstoff (11), aus dem der Förderabschnitt (6) hergestellt ist, eine höhere Oberflächenhärte aufweist als der Werkstoff (12), aus dem der Antriebsabschnitt (7) hergestellt ist.

5. Straßenfertiger oder Beschicker nach einem der vorangehenden Ansprüche, dadurch **gekennzeichnet, dass** die Förderschnecke (5) für Einsatztemperaturen von mindestens 100 °C geeignet ist.

6. Straßenfertiger oder Beschicker nach einem der vorangehenden Ansprüche, dadurch **gekennzeichnet, dass** die Förderschnecke (5) zum Befördern von Schüttgut (3), das eine Körnung im Bereich zwischen 0 und 180 mm aufweist, geeignet ist.

7. Straßenfertiger oder Beschicker nach einem der vorangehenden Ansprüche, dadurch **gekennzeichnet, dass** die Förderschnecke (5) für Drehzahlen im Bereich zwischen 0 und 250 Umdrehungen pro Minute ausgelegt ist.

8. Straßenfertiger oder Beschicker nach einem der vorangehenden Ansprüche, dadurch **gekennzeichnet, dass** die Förderschnecke (5) zum Befördern von Schüttgut (3), das eine Viskosität im Bereich zwischen 10⁵ und 10¹⁸ mPa·s aufweist, geeignet ist.

9. Straßenfertiger oder Beschicker nach einem der vorangehenden Ansprüche, dadurch **gekennzeichnet, dass** die Förderschnecke (5) zum Befördern von bituminösen Mischgütern, insbesondere Asphalt geeignet ist.

10. Straßenfertiger oder Beschicker nach einem der vorangehenden Ansprüche, dadurch **gekennzeichnet, dass** die Drehzahl der mindestens einen Förderschnecke (5) während des Betriebs stufenlos verstellbar ist.

11. Straßenfertiger oder Beschicker nach einem der vorangehenden Ansprüche, dadurch **gekennzeichnet, dass** mehrere Förderschnecken (5a, 5b) vorgesehen sind und die Förderschnecken (5a, 5b) unabhängig voneinander betreibbar sind.

12. Straßenfertiger oder Beschicker nach einem der vorangehenden Ansprüche, dadurch **gekennzeichnet, dass** das mindestens eine Materialfördersystem (4) als Querfördersystem (4) oder als Längsfördersystem einsetzbar ist.

## Claims

1. Road finisher (1) or feeder (1) with at least one material conveyor system (4) having at least one conveyor screw (5), which comprises:
a conveyor section (6) configured to convey bulk material (3),
and a driving section (7) designed to receive a driving torque or a driving force and to transmit it to the conveyor section (6),
**characterized in that** the conveyor section (6) and the driving section (7) are connected to each other by friction welding.

2. Road finisher or feeder according to claim 1, **characterized in that** the conveyor section (6) and the driving section (7) are made of different materials (11, 12).

3. Road finisher or feeder according to one of the preceding claims,
**characterized in that** the material (11) of which the conveyor section (6) is made has a higher strength than the material (12) of which the driving section (7) is made.

4. Road finisher or feeder according to one of the preceding claims,
**characterized in that** the material (11) of which the conveyor section (6) is made has a higher surface hardness than the material (12) of which the driving section (7) is made.

5. Road finisher or feeder according to one of the preceding claims,
**characterized in that** the conveyor screw (5) is suited for application temperatures of at least 100 °C.

6. Road finisher or feeder according to one of the preceding claims,
**characterized in that** the conveyor screw (5) is suited for conveying bulk material (3) having a graining between 0 and 180 mm.

7. Road finisher or feeder according to one of the preceding claims,
**characterized in that** the conveyor screw (5) is designed for speeds within a range of between 0 and 250 revolutions per minute.

8. Road finisher or feeder according to one of the preceding claims, **characterized in that** the conveyor screw (5) is suited for conveying bulk material (3) having a viscosity within a range of between 10⁵ and 10¹⁸ mPa·s.

9. Road finisher or feeder according to one of the preceding claims, **characterized in that** the conveyor screw (5) is suited for conveying bituminous mixed material, in particular asphalt.

10. Road finisher or feeder according to one of the preceding claims, **characterized in that** the speed of the at least one conveyor screw (5) may be continuously variable during operation.

11. Road finisher or feeder according to one of the preceding claims, **characterized in that** several conveyor screws (5a, 5b) are provided and the conveyor screws (5a, 5b) may be operated independently.

12. Road finisher or feeder according to one of the preceding claims, **characterized in that** the at least one material conveyor system (4) may be employed as transverse conveyor system (4) or as longitudinal conveyor system.

## Revendications

1. Finisseur de route (1) ou alimentateur (1) comprenant au moins un système de transport de matériau (4) présentant au moins une vis sans fin de transport (5), qui comporte :
un tronçon de transport (6) configuré pour transporter du produit en vrac (3),
et un tronçon d'entraînement (7), qui est conçu pour reprendre un couple d'entraînement ou une force d' entraînement et le transférer au tronçon de transport (6),
**caractérisé en ce que** le tronçon de transport (6) et le tronçon d'entraînement (7) sont reliés ou assemblés mutuellement par soudage par friction.

2. Finisseur de route ou alimentateur selon la revendication 1, **caractérisé en ce que** le tronçon de transport (6) et le tronçon d'entraînement (7) sont fabriqués en des matériaux (11, 12) différents.

3. Finisseur de route ou alimentateur selon l'une des revendications précédentes, **caractérisé en ce que** le matériau (11) dont est fabriqué le tronçon de transport (6) présente une résistance supérieure à celle du matériau (12) dont est fabriqué le tronçon d'entraînement (7).

4. Finisseur de route ou alimentateur selon l'une des revendications précédentes, **caractérisé en ce que** le matériau (11) dont est fabriqué le tronçon de transport (6) présente une dureté superficielle supérieure à celle du matériau (12) dont est fabriqué le tronçon d'entraînement (7).

5. Finisseur de route ou alimentateur selon l'une des revendications précédentes, **caractérisé en ce que** la vis sans fin de transport (5) est adaptée à des températures d'utilisation d'au moins 100°C.

6. Finisseur de route ou alimentateur selon l'une des revendications précédentes, **caractérisé en ce que** la vis sans fin de transport (5) est adaptée au transport de produit en vrac (3), qui présente une granulométrie située dans une plage entre 0 et 180 mm.

7. Finisseur de route ou alimentateur selon l'une des revendications précédentes, **caractérisé en ce que** la vis sans fin de transport (5) est dimensionnée pour des vitesses de rotation situées dans une plage entre 0 et 250 tours par minute.

8. Finisseur de route ou alimentateur selon l'une des revendications précédentes, **caractérisé en ce que** la vis sans fin de transport (5) est adaptée au transport de produit en vrac (3), qui présente une viscosité située dans une plage entre 10⁵ et 10¹⁸ mPa·s.

9. Finisseur de route ou alimentateur selon l'une des revendications précédentes, **caractérisé en ce que** la vis sans fin de transport (5) est adaptée au transport de mélanges bitumineux, notamment de l'asphalte.

10. Finisseur de route ou alimentateur selon l'une des revendications précédentes, **caractérisé en ce que** la vitesse de rotation de ladite au moins une vis sans fin de transport (5) est réglable en continu au cours du fonctionnement.

11. Finisseur de route ou alimentateur selon l'une des revendications précédentes, **caractérisé en ce que** sont prévues plusieurs vis sans fin de transport (5a, 5b), et les vis sans fin de transport (5a, 5b) peuvent fonctionner indépendamment les unes des autres.

12. Finisseur de route ou alimentateur selon l'une des revendications précédentes, **caractérisé en ce que** ledit au moins un système de transport de matériau (4) peut être mis en oeuvre en tant que système de transport transversal (4) ou en tant que système de transport longitudinal.
